# DEMANDE DE BREVET EUROPEEN

(11) **EP 0 606 185 A1**
(43) Date de publication de la demande: **13.07.1994**
(21) Numéro de dépôt: 94400024.9
(22) Date de dépôt: 05.01.1994
(51) Int. Cl.: B29D 1/00, B29C 67/14, B29C 67/18, B29C 67/12

(54) **Procédé de réalisation d'un doigt de gant en matériau composite et doigt de gant ainsi obtenu**

(30) Priorité: 05.01.1993 FR 9300018
(71) Demandeur: ELECTRICITE DE FRANCE Service National, F-75008 Paris (FR); SEPMA SA, F-68100 Mulhouse (FR)
(72) Inventeur: Emin, Michel, F-69003 Lyon (FR); Pilastre, André, F-69340 Francheville (FR); Baguet, Michel, F-68260 Kingersheim (FR)
(74) Mandataire: Schrimpf, Robert

(57) **Abrégé**

L'invention concerne un procédé de réalisation d'un doigt de gant en matériau composite, comprenant les étapes consistant à :
- réaliser un manchon (1) fermé à une extrémité par enroulement de fibres de carbone imprégnées de résine époxyde, cet enroulement présentant des surépaisseurs,
- polymériser l'enroulement,
- usiner les surépaisseurs de l'enroulement pour définir au moins une surface d'apprêt (10,15),
- former par surmoulage un filetage (21,31) sur chaque surface d'apprêt (10,15).

## Description

La présente invention concerne un procédé de réalisation d'un doigt de gant en matériau composite et le doigt de gant ainsi obtenu.

On appelle doigt de gant, de façon générale, une pièce ayant la forme générale d'un manchon, le plus souvent fileté extérieurement, fermé à une extrémité et à introduire par cette extrémité dans un embout taraudé communiquant de façon étanche avec une canalisation. Une sonde de température est introduite par l'extrémité ouverte du manchon jusqu'au fond de ce dernier, pour mesurer la température d'un fluide circulant dans la canalisation, au travers de la paroi du manchon. Le doigt de gant ferme l'embout de façon étanche grâce à l'engagement des filetages du doigt de gant et de l'embout, et lorsque le doigt de gant n'est pas fileté extérieurement, par collage de ce dernier dans l'embout.

Les doigts de gant ont été traditionnellement réalisés en métal. Toutefois, avec l'avènement des canalisations en matériaux composites, on a proposé, pour pallier les phénomènes de corrosion et le remplacement fréquent des doigts de gant en métal qui en résultait, de réaliser ceux-ci dans un matériau inerte chimiquement, par exemple en polytétrafluoréthylène, le filetage étant ensuite réalisé par usinage direct du manchon.

Cependant, l'usage des doigts de gant en polytétrafluoréthylène reste limité en raison du coût de ce matériau, de sa mauvaise conductibilité thermique et de sa mauvaise rigidité mécanique, et l'on a cherché à remplacer celui-ci par des matériaux composites moins coûteux, notamment des enroulements filamentaires de fibres de verre imprégnées de résine époxyde, le filetage étant toujours réalisé par usinage direct. On a décrit dans la publication EP-0 428 808 un procédé pour réaliser par usinage un filetage sur un tube en matériau composite. Les doigts de gant réalisés avec usinage direct du filetage n'ont pas donné satisfaction car l'usinage du filetage endommage les fibres du matériau, entraînant par la suite une mauvaise tenue mécanique et étanchéité.

La présente invention a pour objet de remédier aux inconvénients précités, en proposant un procédé de réalisation d'un doigt de gant en matériau composite, caractérisé en ce qu'il comprend les étapes consistant à:
- réaliser un manchon fermé à une extrémité par enroulement de fibres de carbone imprégnées de résine, cet enroulement présentant des surépaisseurs,
- polymériser l'enroulement,
- usiner les surépaisseurs de l'enroulement pour conférer au manchon la géométrie souhaitée, et
- réaliser sur au moins une surface d'apprêt du manchon par surmoulage un filetage.

Avantageusement, ladite surface d'apprêt est conique et le filetage réalisé sur cette surface est conique.

Avantageusement, le filetage est réalisé à l'aide d'au moins un conformateur présentant une surface filetée de forme complémentaire du filetage à réaliser, l'un au moins du conformateur et de l'enroulement étant enduit de résine chargée puis le conformateur et l'enroulement sont introduits l'un dans l'autre jusqu'à positionner la surface d'apprêt en regard de la surface filetée, l'excès de résine débordant de l'espace formé entre les surfaces en regard étant le cas échéant éliminé, la résine étant ensuite polymérisée et le conformateur retiré par dévissage.

La présente invention a également pour objet un doigt de gant obtenu conformément au procédé selon l'invention.

D'autres caractéristiques et avantages de la présente invention apparaîtront à la lecture de la description détaillée qui va suivre, non limitative de l'invention, et à l'examen du dessin annexé sur lequel :
- la figure 1 est une vue, en coupe axiale, d'un manchon réalisé conformément à une première étape du procédé selon l'invention,
- la figure 2 est une vue en coupe axiale du manchon usiné,
- la figure 3 est une vue en coupe axiale montrant schématiquement la réalisation d'un filetage par surmoulage sur le manchon usiné,
- la figure 4 est une vue schématique, en coupe axiale, d'un doigt de gant obtenu conformément à l'invention,
- la figure 5 montre de façon schématique, en coupe axiale, un doigt de gant conforme à l'invention, engagé dans un embout formant moyen de piquage sur une canalisation de fluide.

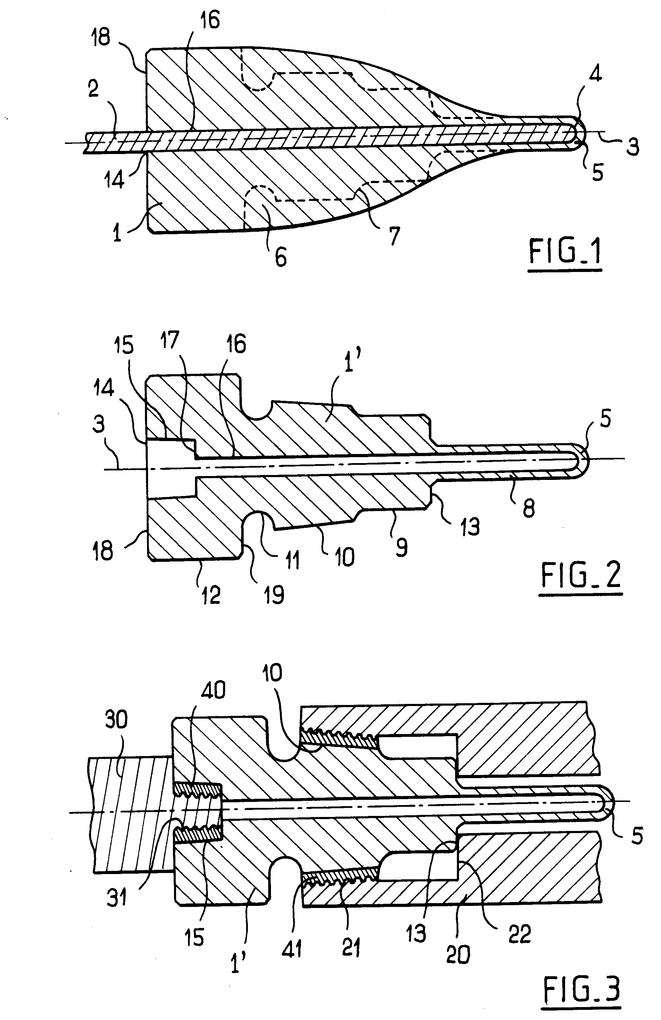

On a représenté sur la figure 1 un manchon 1 cylindrique de révolution autour d'un axe longitudinal 3 et réalisé selon des techniques connues d'enroulement filamentaire de fibres de carbone imprégnées de résine, de préférence une résine époxyde, autour d'un mandrin 2 cylindrique de révolution s'étendant selon l'axe 3 précité.

L'enroulement filamentaire présente des surépaisseurs 6 délimitées par une ligne 7 en pointillés, qui seront ensuite usinées comme on le verra dans la suite. Le manchon 1 présente une extrémité fermée 5 en regard de l'extrémité libre 4 du mandrin, et une extrémité ouverte 14 à l'opposé, par laquelle sort le mandrin 2. Le manchon 1 présente, avant usinage, une surface externe de diamètre croissant depuis l'extrémité 4, arrondie, jusqu'à l'extrémité ouverte 14, la tranche d'extrémité 18 du manchon 1 étant perpendiculaire à l'axe 3. La surface interne du manchon, cylindrique de révolution autour de l'axe 3, est référencée 16. L'enroulement de fibres de carbone imprégnées de résine est polymérisé à chaud selon des techniques connues. Les surépaisseurs 6 précitées sont ensuite usinées comme représenté sur la figure 2, et plus particulièrement, le manchon usiné, référencé 1', présente, depuis son extrémité fermée 5 et en direction de son extrémité ouverte 14 une première partie 8 cylindrique, une deuxième partie cylindrique 9 de diamètre supérieur, une troisième partie présentant une surface conique divergeante 10, une gorge annulaire 11 puis une quatrième partie cylindrique de plus grand diamètre 12. Les surfaces cylindriques des première et deuxième parties 8 et 9 se raccordent en formant un épaulement transversal 13 perpendiculaire à l'axe 3. La gorge annulaire 11 se raccorde à la partie cylindrique 12 tangentiellement à un épaulement transversal perpendiculaire à l'axe 3. Le fond de la gorge annulaire 11 se situe sensiblement à la même distance de l'axe 3 que la surface cylindrique de la deuxième partie 9. Le manchon usiné 1' est fraisé à son extrémité ouverte 14 pour former une surface conique 15 convergeant en direction de l'extrémité fermée 5 et se raccordant sur la surface intérieure cylindrique 16 précitée en formant un épaulement transversal 17 perpendiculaire à l'axe 3 et dirigé vers cet axe.

Des filetages sont avantageusement formés conformément à l'invention sur le manchon usiné 1' sur les surfaces 10 et 15 par surmoulage. Plus particulièrement, on utilise pour ce faire des conformateurs 20 et 30 présentant respectivement des surfaces filetées 31 et 21 de forme complémentaire des filetages à réaliser sur les surfaces 10 et 15.

Pour réaliser les filetages on procède comme suit : les surfaces 10 et 15 et les surfaces filetées 21 et 31 sont enduites de résine chargée puis positionnées en regard les unes des autres.

De préférence, les surfaces précitées sont enduites d'un excès de résine de façon à assurer un remplissage complet de l'espace compris entre les surfaces en regard, l'excès de résine débordant hors de cet espace étant ensuite, au besoin, éliminé avant polymérisation de la résine.

De préférence, le positionnement précis des surfaces 15, 31 et 10, 21 s'obtient par butée axiale du conformateur 30 contre la tranche d'extrémité 18 du manchon 1' et par butée axiale du conformateur 20 contre l'épaulement transversal 13.

De préférence, la polymérisation de la résine est effectuée en deux étapes. Dans une première étape, on laisse gélifier la résine chargée à température ambiante puis, dans une deuxième étape, l'ensemble est chauffé à une température plus élevée, typiquement supérieure à 100°C, dont le choix dépend de la résine utilisée.

Ensuite, après polymérisation, on laisse refroidir jusqu'à température ambiante et les conformateurs 20 et 30 sont retirés par dévissage. Les filetage réalisés sur les surfaces 10 et 15 sont respectivement référencés 41 et 40. Bien entendu, on peut effectuer sur le doigt de gant obtenu, muni de ses filetages 40 et 41, tous travaux de finition connus de l'homme de l'art, notamment pour éliminer les bavures venues du moulage.

La résine chargée qui est utilisée est choisie par l'homme de l'art en fonction notamment de la tenue mécanique et de la tenue en température souhaitée. Avantageusement, la résine est une résine époxyde, mélangée de préférence vingt-quatre heures avant utilisation, avec un durcisseur polyamine cycloaliphatique et avec des charges minérales. De préférence, on incorpore entre 50 et 70 % en masse de charge minérale, constituée avantageusement par des fibres de longueur inférieure à 1 mm et de diamètre maximal de 30 µm et par des microbilles de verre de diamètre maximal 50 µm.

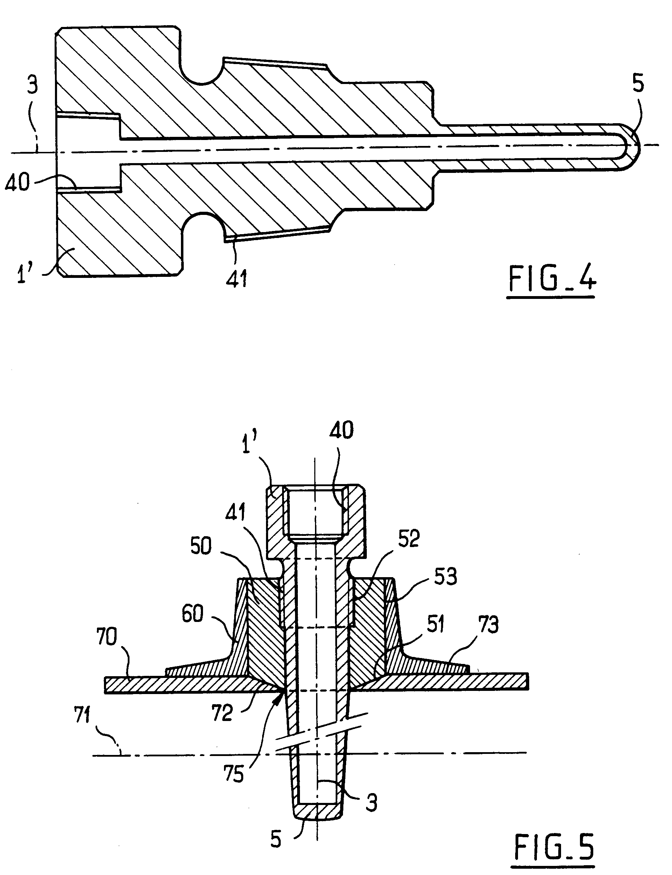

Le doigt de gant ainsi obtenu est avantageusement engagé, comme schématiquement représenté sur la figure 5, dans un embout 50 raccordé sur une canalisation 70 de fluide pour former un moyen de piquage sur cette canalisation, de préférence réalisé comme suit.

Le filetage 41 permet de fixer par vissage, de façon amovible, le doigt de gant dans l'embout 50 tandis que le filetage 40 permet de fixer un élément de mesure de température ou autre à l'intérieur du doigt de gant.

On commence par réaliser sur la canalisation 70, s'étendant selon un axe longitudinal 71, en un point de piquage où l'on désire mesurer la température du fluide, un perçage 75 débouchant à l'intérieur de celle-ci.

L'axe du perçage 75 est confondu avec l'axe 3 du doigt de gant sur la figure 5 et coupe perpendiculairement l'axe 71 de la canalisation 70. Le perçage 75 est effectué par tout moyen approprié connu de l'homme de l'art, par exemple au moyen d'une cloche en acier diamanté.

Le diamètre du perçage 75 est adapté pour recevoir une extrémité 72 d'un embout tubulaire 50 muni intérieurement d'un filetage 52, apte à coopérer avec le filetage 41 précité.

De préférence, l'embout 50 est réalisé par enroulement filamentaire de fibres de verre imprégnées de résine et le filetage 52 est venu de surmoulage sur une partie de la surface interne de l'embout, par un procédé analogue à celui qui vient d'être décrit dans le cadre de la réalisation des filetages 40 et 41.

Avantageusement, comme représenté sur la figure 5, le perçage 75 est fraisé, de préférence à 45°, pour former une surface conique 72, s'élargissant vers l'extérieur de la canalisation, et l'embout 50 est chanfreiné à son extrémité 51 de façon complémentaire de façon à réaliser un assemblage conique de l'embout 50 sur la canalisation 70. L'embout 50 et la canalisation 70 sont solidarisés par collage, de préférence au moyen d'une colle époxyde à deux composants, connue en elle-même. Après durcissement de la colle, la surface externe 73 de la canalisation 70 bordant le perçage 72 et la surface externe 53 de l'embout 50 sont dépolies, par exemple au moyen d'une meule diamantée, pour enlever les traces de colle ayant débordé de ces surfaces lors du collage de l'embout 50 sur la canalisation 70. Ensuite, la tenue de l'embout 50 sur la canalisation 70 est renforcée en appliquant des pièces de renfort 60 en matériau textile, imprégnées de résine, sur la surface externe 73 de la canalisation 70 bordant le perçage 75 et sur la surface externe 53 de l'embout 50, comme représenté sur la figure 5.

De préférence, les pièces de renfort en matière textile sont constituées par du tissu de verre imprégné d'une résine compatible avec le fluide circulant dans la canalisation et avec l'ambiance dans laquelle la canalisation est placée. Il s'agit par exemple d'une résine du type vinylester, et il s'agit plus particulièrement, dans l'exemple de réalisation décrit, de tissu connu sous la désignation commerciale ROVIMAT et de résine commercialisée par la firme DOW CHEMICAL sous la désignation commerciale DERACAN 411.45, avec comme catalyseur du péroxyde de métyléthycétone et comme accélérateur des sels de cobalt et de la diméthylaniline.

Le nombre de pièces de renfort appliquées sur la surface externe de la canalisation et sur l'embout est apprécié par l'homme de l'art en fonction de la tenue mécanique souhaitée. Habituellement, de cinq à dix pièces de renfort en matériau textile suffiront pour la plupart des applications. De préférence les pièces de renfort sont des disques dont le diamètre est supérieur au diamètre externe de l'embout 50, fendus en leur centre par deux lignes de découpe de longueur inférieure au diamètre du disque, ces lignes de découpe se coupant au centre du disque et de préférence à angle droit. Les découpes permettent d'enfiler les disques sur l'embout 50. De préférence, l'empilement des disques est réalisé en prenant des disques de diamètres différents, ceux-ci étant empilés dans l'ordre des diamètres décroissants et en décalant angulairement les lignes de découpe de deux disques successifs.

L'invention permet d'effectuer des mesures de températures de fluides circulant à l'intérieur de canalisations en matériau composite, sans avoir à remplacer le doigt de gant périodiquement, comme cela était le cas pour les doigt de gant métalliques précédemment connus.

La présente invention trouve une application particulièrement avantageuse dans le domaine nucléaire, et permet d'obtenir des tenues à la température et sous une pression variant selon des cycles conformément à la norme ASTM D2143 de 80°C sous 40 bars. En outre, les doigts de gant réalisés conformément à l'invention bénéficient de la faible inertie thermique des fibres de carbone, et les mesures réalisées au moyen de ces doigts de gant suivront de plus près les variations de la température du fluide circulant dans la canalisation que les mesures antérieurement effectuées au moyen de doigts de gant en métal .

On peut, sans sortir du cadre de l'invention, proposer d'autres variantes de réalisation, et l'on peut notamment proposer de profiler l'extrémité immergée des doigts de gant de façon à réduire la résistance à l'écoulement.

On peut également proposer d'utiliser le doigt de gant comme manchon de protection pour un thermoplongeur en remplaçant la sonde de température introduite par l'extrémité ouverte du doigt de gant par une résistance chauffante.

## Revendications

**1/** Procédé de réalisation d'un doigt de gant en matériau composite caractérisé en ce qu'il comprend les étapes consistant à:
- réaliser un manchon fermé à une extrémité par enroulement de fibres de carbone imprégnées de résine, cet enroulement présentant des surépaisseurs,
- polymériser l'enroulement,
- usiner les surépaisseurs de l'enroulement pour conférer au manchon la géométrie souhaitée, et
- réaliser sur au moins une surface d'apprêt (10, 15) du manchon par surmoulage un filetage (40, 41).

**2/** Procédé selon la revendication 1, caractérisé en ce que le filetage est réalisé à l'aide d'au moins un conformateur (20, 30) présentant une surface filetée de forme complémentaire du filetage à réaliser, l'un au moins du conformateur et de l'enroulement étant enduit de résine chargée puis le conformateur et l'enroulement sont introduits l'un dans l'autre jusqu'à positionner la surface d'apprêt (40, 41) en regard de la surface filetée, l'excès de résine débordant de l'espace formé entre les surfaces en regard étant le cas échéant éliminé, la résine étant ensuite polymérisée et le conformateur retiré par dévissage.

**3/** Procédé selon la revendication 2, caractérisé en ce que ladite résine chargée est une résine époxyde comportant une charge comprenant des fibres de longueur inférieure à 1 mm et de diamètre maximal 30 µm et des microbilles en verre de diamètre maximal 50 µm.

**4/** Procédé selon l'une des revendications 2 et 3, caractérisé en ce que ladite charge est incorporée à la résine dans des proportions de 50 à 70 % en masse.

**5/** Procédé selon l'une des revendications 2 à 4, caractérisé en ce que ladite surface d'apprêt (10) est conique et en ce que le filetage (41) réalisé sur cette surface est conique.

**6/** Procédé selon l'une des revendications 2 à 5, caractérisé en ce que le doigt de gant et le conformateur présentent des surfaces transversales aptes à venir en butée axiale lorsque ladite surface d'apprêt et la surface filetée du conformateur sont en regard l'une de l'autre.

**7/** Procédé selon l'une des revendications 2 à 6, caractérisé en ce que la polymérisation de la résine comprend les étapes consistant à laisser gélifier à température ambiante puis à polymériser à une température plus élevée.
